# EUROPEAN PATENT SPECIFICATION

(11) **EP 2 173 123 B1**
(45) Date of publication and mention of the grant of the patent: **15.04.2015**
(21) Application number: 08784141.7
(22) Date of filing: 26.08.2008
(51) Int. Cl.: H04W 36/00, H04W 24/02, H04W 84/04

(54) **METHOD FOR CONFIGURING NEIGHBOR CELL LIST AND CORRESPONDING SYSTEM**
VERFAHREN ZUR KONFIGURATION VON NACHBARZELL-LISTEN UND ENTSPRECHENDES SYSTEM
MÉTHODE DE CONFIGURATION DE LISTES DE CELLULES VOISINES ET SYSTÈME CORRESPONDANT

(30) Priority: 14.09.2007 CN 200710147442
(43) Date of publication of application: 07.04.2010
(73) Proprietor: Huawei Technologies Co., Ltd., Longgang District Shenzhen, Guangdong 518129 (CN)
(72) Inventor: CHEN, Xin c/o Huawei Technologies Co., Ltd., Shenzhen Guangdong 518129 (CN)
(74) Representative: Körber, Martin Hans
(86) International application number: PCT/CN2008/072152
(87) International publication number: WO 2009/043250

(56) References cited:
- WO-A1-2007/026995
- CN-A- 1 859 752
- CN-A- 1 965 603
- US-A1- 2004 224 696
- US-A1- 2005 148 368
- US-A1- 2007 097 938
- US-A1- 2007 097 939
- US-A1- 2007 167 174

## Description

### FIELD OF THE INVENTION

The present invention relates to a mobile communication technique, and more particularly to a method, system, and apparatus for configuring a neighbor list for an access point (AP).

### BACKGROUND

Currently, along with continuous increase in number of users, the traffic of a network system, for example, a second generation mobile communication system (2G) continuously increases as well. In response to the rapidly increased service, the network is required to have higher network capacity, coverage, and quality. The network capacity, coverage, quality are related to one another. Under the premise of ensuring the network capacity and the quality, the improved network coverage helps operators to increase business gains. In order to achieve the objective, various types of base stations (BSs), such as macro BSs, microcell BSs, and distributed BSs, have been developed to make improving the network coverage available.

For an existing coverage network, indoor coverage, especially home coverage, is poor. Typically, the indoor coverage of office buildings is much easier to be realized by adopting an indoor distributed system because the operator pays more attention and the indoor coverage of office buildings does not relate to any private interests. However, it is difficult for the operator to control the home coverage due to the privacy in the home region. After a user goes back home, the user's demand on entertainment is relatively strong, so the traffic of the home region is one of the important sources of the operator's gain. Under this situation, the access point (AP) is proposed in response to the market demand, which has a small volume and low power, and is plug-and-play.

For the user, the AP is set indoors and a 2G macro network is set outdoors for "compensation coverage" or "overlapping coverage". It is necessary to consider the service coherence of the indoor AP and the outdoor macro network. In other words, it is necessary to realize the handover from the AP to the macro cell so as to realize user mobility management, and thus to ensure service continuity. In order to realize the handover from the indoor AP to the macro cell, it is necessary to configure a 2G neighbor for the AP. Only after the available 2G neighbor is firstly configured, the handover from the AP to a certain cell/BS in the 2G neighbor can be realized.

In the prior art, methods of configuring 2G neighbor list for a 3G Base Station involve dedicated-tool configuration and manual configuration.

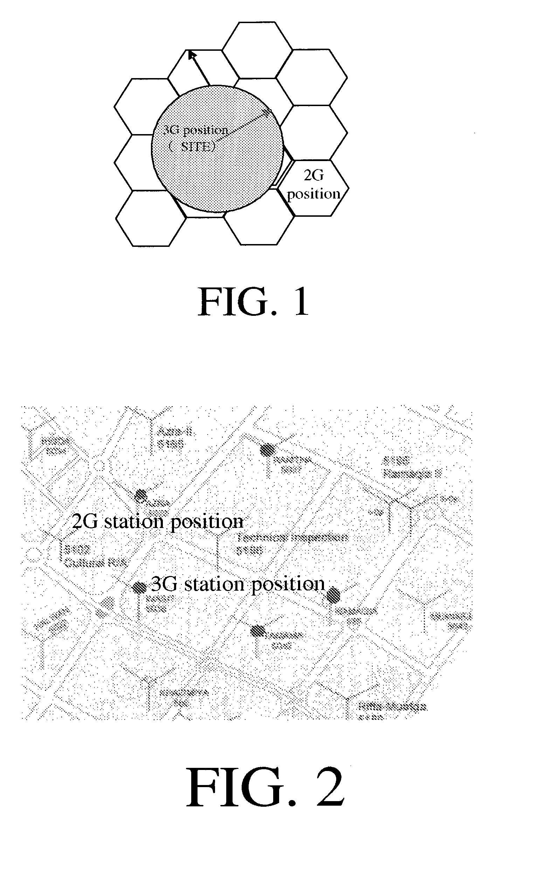

The dedicated-tool configuration refers to that 3G stations and 2G stations are firstly arranged in a network by using dedicated planning tools. A coverage measurement is performed and then the 2G BSs serving as neighbors of the 3G BS are selected based on a result of the coverage measurement. Figure 1 is a principle diagram of configuring the 2G neighbor for the 3G BSs through the dedicated-tool configuration in the prior art. As shown in Figure 1, if a 2G BS signal is measured at the location where the 3G BS coverage is predicted, the 2G BS transmitting the signal is selected as the neighbor of the 3G BS.

Manual configuration refers to that a network planning engineer selects a 2G neighbor for the 3G BS by using a digital map tool. Figure 2 is a principle diagram of configuring the 2G neighbor for the 3G BS through the manual configuration in the prior art. As shown in Figure 2, the 2G stations and the 3G stations are pre-arranged on a map, the network planning engineer selects a 2G BS being nearest to the 3G BS on the geographical position as the neighbor of the 3G BS based on the position of the 3G BS, obtains practical information of the 2G neighbor by searching for a 2G BS full list and forms a 2G neighbor list.

Although the two configuration methods may be widely applicable to configure the 2G neighbor list for the 3G BS, the inventors find deficiencies as follows in the practice. That is, the two methods are not suitable to configure the 2G neighbor list for the AP for the following reasons.

The AP is plug-and-play, and provides service for a great number of home appliances. Commonly, the operator does not design parameters including neighbor configuration for the AP one by one, and most of the parameters are processed by batches. The manual configuration method is not suitable for tens of thousands, hundreds of thousands, or millions of APs. Further, the AP is installed at home with a quite small coverage area. While the existing network planning tool is designed for the outdoor macro network, it may not be adapted to predict the coverage of the AP.

Therefore, the 2G neighbor configuration may not be realized for the AP in the prior art, and it is further impossible to realize the handover from the AP to a 2G network.
WO 2007/026995 A1 discloses a method for determining the location of the mobile communication terminal, comprising searching the network database using the system identifier, the network identifier, and the base station identifier corresponding to the signal information of the reference base station, based on the base station signal information, which is received from the mobile communication terminal, checking information of the reference base station, such as the latitude, the longitude, and the PN offset of the base station, identifying whether a neighboring base station is located within 5 km from the latitude and the longitude information of the reference base station, and storing base station information corresponding to PN offset of the identified neighboring base station in a memory.
US 2005/148368 discloses a method for configuring and integrating an internet base station into an existing wireless cellular communication network.

### SUMMARY

An embodiment of the present invention provides a neighbor list configuration method capable of configuring a 2G neighbor list for an access point (AP).

Another embodiment of the present invention provides a neighbor list configuration system capable of configuring a 2G neighbor list for an AP.

Another embodiment of the present invention provides a configuration maintenance unit and an AP capable of configuring a 2G neighbor list for an AP.

The technical solutions according to the embodiments of the present invention are realized as follows, respectively.

The neighbor list configuration method includes obtaining longitude and latitude information of location of an AP, wherein the AP provides service for a user equipment under the coverage of the AP, searching a full list of second generation mobile communication system (2G) BSs within a set range with a center defined by the obtained longitude and latitude information, obtaining 2G BSs falling within the range, , and generating a 2G neighbor list of the AP based on the obtained 2G BSs, delivering a configuration file carrying with the 2G neighbor list to the AP; optimizing, by the AP, a received 2G neighbor list to obtain an optimized 2G neighbor list by deleting invalid 2G BSs from the received 2G neighbor list, wherein the optimizing the received 2G neighbor list includes: delivering, by the AP, measurement control information carrying with the 2G neighbor list to a user equipment, UE, under the coverage of the AP; receiving, by the AP, a measurement report obtained through measuring BSs contained in the 2G neighbor list from the UE ; and comparing by the AP, the measurement report received from the UE with the 2G neighbor list to obtain the optimized 2G neighbor list by deleting the BSs not recorded in the measurement report from the 2G neighbor list, wherein the 2G neighbor list of the AP is used for handover of the user equipment from the AP to a 2G BS in the 2G neighbor list.

A system includes an access point, AP, and a configuration maintenance unit, wherein the configuration maintenance unit includes a receiving unit, a generating unit, and a transmitting unit , wherein the receiving unit is adapted to receive longitude and latitude information of location of an access point, AP, from a user management unit, and transmit the longitude and latitude information to the generating unit, wherein the AP provides service for a user equipment under the coverage of the AP;
the generating unit is adapted to search a second generation mobile communication system, 2G, base stations, BS, full list within a set range with a center defined by the longitude and latitude information and obtain information of 2G BSs falling within the range, and generate a 2G neighbor list based on the obtained information of the 2G BSs, wherein the 2G neighbor list of the AP is used for handover of the user equipment from the AP to a 2G BS in the 2G neighbor list; and the transmitting unit is adapted to transmit the 2G neighbor list to the AP; wherein the AP comprises a receiving unit and an optimizing unit, wherein the receiving unit is adapted to receive a second generation mobile communication system, 2G, neighbor list from the configuration maintenance unit, and transmit the 2G neighbor list to the optimizing unit; and the optimizing unit is adapted to optimize the received 2G neighbor list to obtain an optimized 2G neighbor list by deleting invalid 2G base stations, BSs, from the received 2G neighbor list, wherein the optimizing unit of the AP comprises a transmitting sub unit (10021), a receiving sub unit and a comparing sub unit, wherein the transmitting sub unit is adapted to transmit measurement control information carrying with the 2G neighbor list to a user equipment, UE, under coverage of the AP;
the receiving sub unit is adapted to receive a measurement report sent by the UE and transmit the measurement report to the comparing sub unit; and the comparing sub unit is adapted to save the 2G neighbor list from the receiving unit and the measurement report from the receiving sub unit, compare the 2G neighbor list with the measurement report to obtain the optimized 2G neighbor list by deleting the BSs not recorded in the measurement report from the 2G neighbor list.

According to embodiments of the present invention, the longitude and latitude information of the AP location is obtained; the 2G BS full list is searched within the set range with a center defined with the obtained longitude and latitude information, to obtain the 2G BSs within the set range, and the 2G neighbor list is generated based on the 2G BSs obtained. As seen, according to the embodiments of the present invention, for a great number of APs, the configuration of the 2G neighbors for the APs is automatically finished by using the longitude and latitude information of the AP location to facilitate the subsequent handover from the AP to a 2G network, thereby ensuring service continuity during the handover.

### BRIEF DESCRIPTION OF THE DRAWINGS

Figure 1 is a principle diagram of configuring a 2G neighbor for a 3G BS with a dedicated-tool in the prior art;
Figure 2 is a principle diagram of configuring a 2G neighbor for a 3G BS manually in the prior art;
Figure 3 is a schematic flowchart of a method according to an embodiment of the present invention;
Figure 4 is a schematic flowchart of a method according to a preferable embodiment of the present invention;
Figure 5 is a schematic view of a system on which the methods according to the embodiments of the present invention are based;
Figure 6 is a schematic view of a longitude search window and a latitude search window calculated by methods according to the embodiment of the present invention;
Figure 7 is a schematic flowchart of optimizing a candidate 2G neighbor list by an AP according to a method embodiment of the present invention;
Figure 8 is a schematic view of the system according to an embodiment of the present invention;
Figure 9 is a schematic view of a configuration maintenance unit according to an embodiment of the present invention; and
[0029] Figure 10 is a schematic view of the AP according to an embodiment of the present invention.

### DETAILED DESCRIPTION

In an embodiment of the present invention, longitude and latitude information of an access point (AP) location is obtained by using address information contained in the user's registration information during subscription upon start-up of the AP. The registration information may include user name, home address/AP installation address, identity, access number, house region, and contact information. A full list of 2G base stations (BSs) provided by the operator is searched within a pre-set range with a center defined by the obtained longitude and latitude information, and a required 2G neighbor list is obtained. Subsequently, the 2G neighbor list may be delivered to the AP, and the AP may further optimize the received 2G neighbor list to obtain an optimized 2G neighbor list by deleting invalid cells.

A detailed description of the present invention is given as follows with reference to accompanying drawings and embodiments to make the objective, technical scheme and beneficial effects of the invention clear.

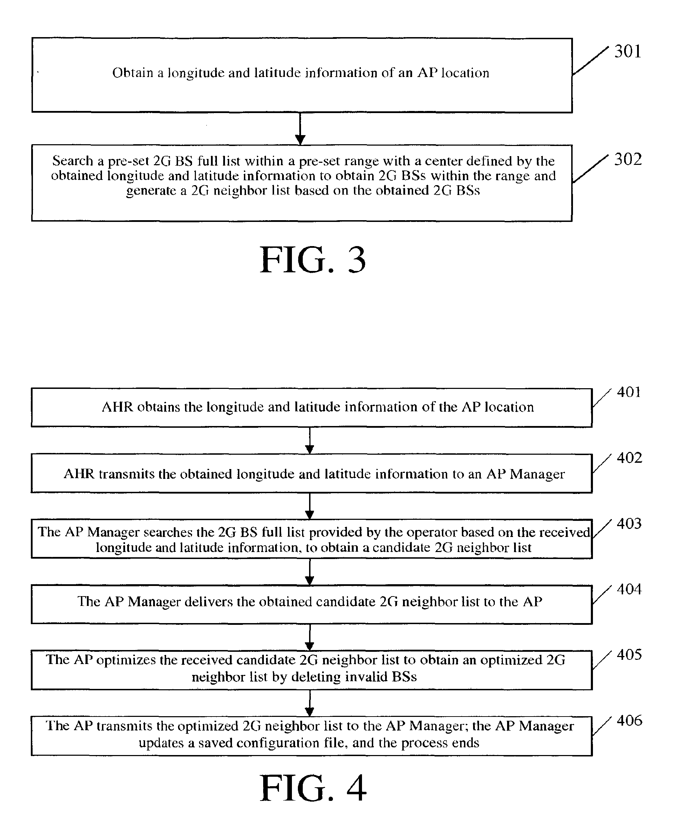

Figure 3 is a schematic flowchart of a method according to an embodiment of the present invention. As shown in FIG. 3, the method includes steps as follows.

In step 301, longitude and latitude information of an AP location is obtained.

Prior to the present step, the method may further include obtaining address information registered by the AP owner during subscription, for example, AP installation address or users' address, including street number, residence name, or building name etc. The information may be saved in a user management unit in advance, such as an Access Point Home Register (AHR).

The longitude and latitude information of the AP location is obtained in an automatic mode or manual mode by using the obtained address information of the AP. The so-called automatic mode refers to that a digital map of a city in which the operator is located is pre-stored in a user management unit, such as the AHR. After the address information of the AP is input, the AHR automatically searches for the position of the AP in the digital map based on the street name, residence name, or building name contained in the input information, so as to obtain the longitude and latitude information corresponding to the position, and input the longitude and latitude information to an entity executing step 302. The accuracy of the searching mode depends on the information accuracy of the digital map. Alternatively, the manual manner is adopted, and the personnel manually search for the position of the AP in the digital map based on the obtained address information of the AP to obtain and then input the required longitude and latitude information to the entity executing step 302.

In step 302, a pre-set 2G BS full list is searched within a pre-set range with a center defined by the obtained longitude and latitude information to obtain 2G BSs within the range and generate a 2G neighbor list based on the obtained 2G BSs.

In this step, centered on the longitude X and the latitude Y obtained at step 301, offsets ΔX and ΔY are respectively added to the longitude X and the latitude Y to obtain a longitude search window X-ΔX, X+ΔX and a latitude search window Y-ΔY, Y+ΔY. The 2G BS full list is respectively searched within a range determined by the longitude search window and the latitude search window to obtain 2G BSs in a cross region of the longitude search window and the latitude search window, which are the BSs required in the 2G neighbor list.

The 2G neighbor list for the AP can be obtained through steps 301-302. The 2G neighbor list obtained through the above steps is a rough neighbor list, which includes all the possible 2G neighbors, and may include some invalid neighbors. Therefore, the 2G neighbor list obtained in step 302 may further be delivered to the AP and the AP optimizes the received 2G neighbor list to obtain an optimized 2G neighbor list by deleting invalid neighbors. The detailed implementation is described as follows. The AP transfers measurement control information carrying with the 2G neighbor list to a user equipment (UE) under the coverage of the AP. The UE measures the BSs in the received 2G neighbor list, and sends a measurement report to the AP. The AP compares the received measurement report with the 2G neighbor list to obtain the optimized 2G neighbor list by deleting those BSs not recorded in the measurement report from the 2G neighbor list.

Then, the AP sends the optimized 2G neighbor list to the entity delivering the 2G neighbor list for storage and updating.

As follows, a method embodiment is further described in detail by way of example in which the entity executing step 301 is AHR, and the entity executing step 302 is a configuration maintenance unit such as an AP manager.

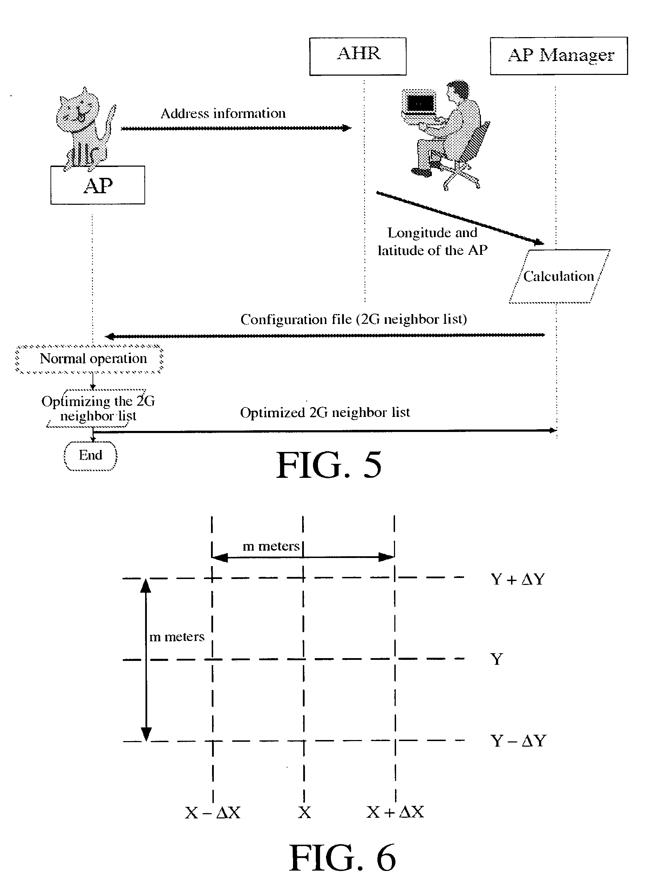

Figure 4 is a flowchart of a method according to a preferable embodiment of the present invention. The embodiment is implemented based on the system as shown in Figure 5. As shown in Figure 4, the method includes the steps as follows.

In step 401, the AHR obtains the longitude and latitude information of the AP location.

It is assumed that the longitude and latitude information of the AP location is obtained in an automatic manner in this embodiment. The working personnel input the address information registered by the AP owner during subscription, which may be street number, residence name, or building name, into the AHR. The AHR automatically searches for the position information of the AP location in a digital map stored in the AHR based on the address information to obtain the longitude and latitude information corresponding to the position of the AP location.

In the embodiment of the present invention, the digital map with a geographic information system (Mapinfo) format is preferred.

In step 402, the AHR may transmit the obtained longitude and latitude information to the AP Manager.

In this step, the AHR transmits the obtained longitude and latitude information to the AP Manager through an existing interface.

In step 403, the AP Manager searches the 2G BS full list provided by the operator based on the received longitude and latitude information to obtain a candidate 2G neighbor list.

After receiving the longitude and latitude information from the AHR, the AP Manager firstly processes the information, for example, respectively adds offsets to the received longitude and latitude as a center, and obtains a longitude search window and a latitude search window. The arithmetic is described as follows.
Longitude: X;
Latitude: Y;
Longitude search window: X - ΔX, X + ΔX;
Latitude search window: Y - ΔY, Y + ΔY;
where, ΔX = F1(m)/2; ΔY = F2(m)/2.

*F1(m)* is adapted to calculate a longitude value corresponding to a geographical position at m meters from a geographical position corresponding to the obtained longitude. Similarly, *F2(m)* is adapted to calculate a latitude value corresponding to a geographical position at m meters from a geographical position corresponding to the obtained latitude. The two calculations are based on geographical calculating formulas known in the prior art, and thus not repeated in detail here.

According to the above arithmetic, the longitude search window and the latitude search window corresponding to the longitude X and the latitude Y respectively may be calculated, as shown in Figure 6. Figure 6 is a schematic view of the longitude search window and the latitude search window calculated according to the arithmetic above. In the embodiment of the present invention, the scopes of the longitude and the latitude, i.e., the offsets, may be scaled freely according to the practical demand.

After the longitude search window and the latitude search window are calculated, the required 2G neighbors may be retrieved subsequently with the longitude search window and the latitude search window. In the embodiment of the present invention, for ease of searching, the 2G BS full list may satisfy the content and the format as shown in Table 1.

**Table 1**

| Longitude (X) | Latitude (Y) | Station Name | Cell Group Identifier (CGI) | BS Identity Code (BSIC) |
|---|---|---|---|---|
| | | | | |

If the format of the 2G BS full list provided by the operator does not satisfy the format as shown in Table 1, a format conversion is available. The table conversion technique is well known in the prior art, so it is not repeated here.

In the embodiment of the present invention, a detailed searching mode may be as follows. In the scope determined by the longitude search window, the 2G BS full list satisfying the format as shown in Table 1 is searched to obtain a group of 2G BSs having longitude values falling within the scope covered by the longitude search window. Using the similar method, in the scope determined by the latitude search window, the 2G BS full list satisfying the format as shown in Table 1 is searched to obtain a group of 2G BSs having latitude values falling within the scope covered by the latitude search window. The two searching modes can be carried out in any particular order. The common BSs in the two groups of 2G BSs obtained in the two searching modes are retrieved, which are referred as BSs in the 2G neighbor list for the AP.

In this embodiment, since the 2G neighbor list will be optimized subsequently, the 2G neighbor list obtained in this step is called as candidate 2G neighbor list.

In step 404, the AP Manager delivers the obtained candidate 2G neighbor list to the AP.

In this step, the AP Manager configures the obtained candidate 2G neighbor list in a configuration file commonly used in the prior art, and sends the configuration file carrying with the candidate 2G neighbor list information to the AP through a present interface to the AP. The AP rebuilds the cell according to the received configuration file.

In step 405, the AP optimizes the received candidate 2G neighbor list to obtain an optimized 2G neighbor list by deleting invalid BSs.

Responsive to receiving the candidate 2G neighbor list from the AP Manager, the AP transmits system broadcast information to UEs under the coverage of the AP, wherein measurement control information of system broadcast information carries the candidate 2G neighbor list. Further, the AP may transmit measurement threshold information to the UEs through the system broadcast information.

After receiving the system broadcast information, the UE starts to measure the BSs in the candidate 2G neighbor list when the measurement threshold is satisfied, and sends a measurement report, such as information about signal intensity, to the AP. How to measure the BSs pertains to the prior art, so it is not repeated in detail here.

In this embodiment, the AP may have a neighbor optimization function switch disposed therein. According to the practical demand, the neighbor optimization function switch may be turned on at a certain moment, so as to start an optimization timer. Generally, the timing length of the optimization timer is one month. Optionally, it is also possible to freely adjust the timing length to any other values according to the practical demand. Before the optimization timer times out, the AP always receives and saves the measurement report from the UE. When the optimization timer reaches the set time, the AP compares the saved measurement report with the candidate 2G neighbor list, and deletes the BSs not recorded in the measurement report from the candidate 2G neighbor list. The list formed by the remained 2G BSs is the optimized 2G neighbor list.

The time of starting the optimization timer may be determined according to the practical demand. For example, it is possible to start the optimization timer when the AP transmits the system broadcast information to the UE.

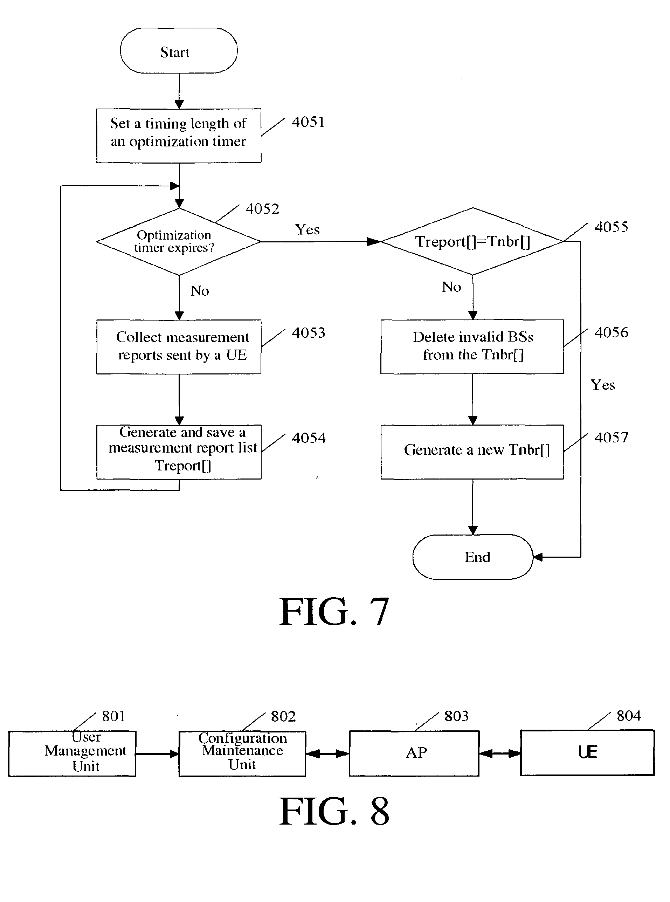

Figure 7 is a schematic flowchart of optimizing the candidate 2G neighbor list by the AP according to an embodiment of the present invention. As shown in Figure 7, the optimizing includes the steps as follows.

In step 4051, the timing length of the optimization timer is set.

As an example, the timing length is set as one month in this embodiment.

In step 4052, it is determined whether the optimization timer times out or not. If the timer times out, the process turns to step 4055; otherwise, the process turns to step 4053.

In step 4053, a measurement report sent by the UE is collected.

In step 4054, a measurement report list Treport[] is generated and saved and then the process turns to step 4052.

In step 4055, it is determined whether the BSs recorded in the saved Treport[] and the candidate 2G neighbor list (represented by Tnbr[]) are consistent with each other by comparison. if consistent, the process ends; otherwise, the process turns to step 4056.

In this step, determining whether the BSs recorded in the Treport[] and the Tnbr[] are consistent includes judging whether a 2G BS recorded in the Tnbr[] has a corresponding measurement report in the Treport[], if not, the 2G BS is determined as an invalid BS.

In step 4056, the invalid BS is deleted from the Tnbr[].

In step 4057, a new Tnbr[] is generated.

The new generated Tnbr[] is referred as the optimized 2G neighbor list.

In the process as shown in Figure 7, if the AP does not receive any measurement report sent by the UE after the optimization timer times out, all the 2G BSs in the Tnbr[] are considered as invalid BSs.

In step 406, the AP transmits the optimized 2G neighbor list to the AP Manager, the AP Manager updates the saved configuration file, and the process ends.

In the embodiment of the present invention, the formats of the candidate 2G neighbor list, the optimized 2G neighbor list, and the measurement report may be set based on the practical demand.

Based on the process described above, Figure 8 shows a schematic view of a system according to an embodiment of the present invention. Referring to FIG. 8, the system includes a user management unit 801 and a configuration maintenance unit 802.

The user management unit 801 is adapted to obtain the longitude and latitude information of the AP location and transmit the obtained longitude and latitude information to the configuration maintenance unit 802.

The configuration maintenance unit 802 is adapted to search a 2G BS full list within a set range centered on the longitude and latitude to obtain 2G BSs falling within the range, and generate a 2G neighbor list based on the obtained 2G BSs.

The system further includes an AP 803 and a UE 804. In the practice, one AP 803 may correspond to a plurality of UEs 804. The UEs 804 have the same function in this embodiment, so only one UE 804 is shown in Figure 8 for simplification.

The AP 803 is adapted to receive and save the 2G neighbor list delivered by the configuration maintenance unit 802, transmit measurement control information carrying with the 2G neighbor list to the UE 804, receive the measurement report sent by the UE 804, compare the received measurement report with the 2G neighbor list received from the configuration maintenance unit 802 to obtain an optimized 2G neighbor list by deleting the BSs not recorded in the measurement report from the 2G neighbor list.

The UE 804 is adapted to receive the measurement control information carrying with the 2G neighbor list delivered by the AP 803, measure the BSs in the 2G neighbor list, and send the measurement report to the AP 803.

The user management unit 801 may be an AHR. The configuration maintenance unit 802 may be an AP Manager.

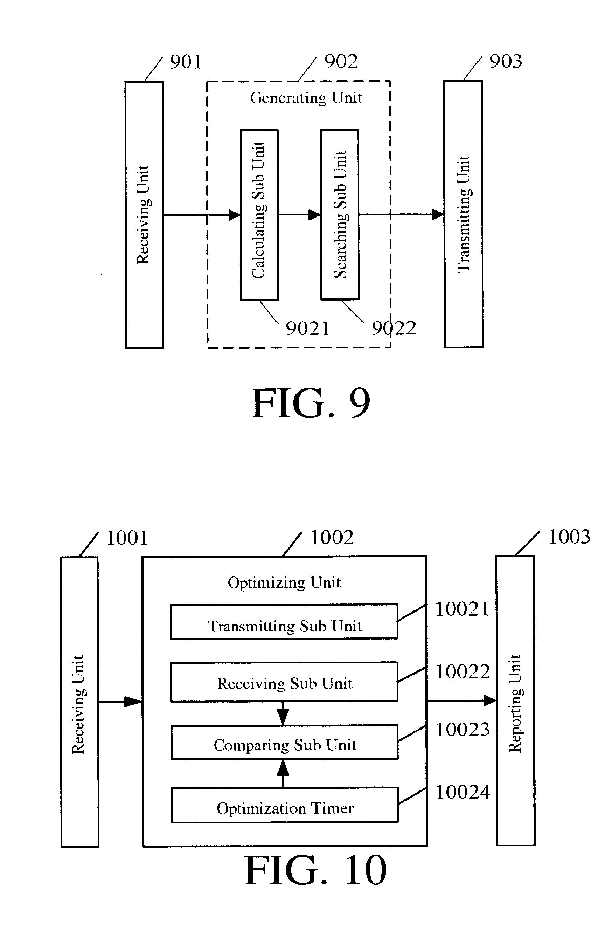

Figure 9 is a schematic view of the configuration maintenance unit 802 according to an embodiment of the present invention. Referring to Figure 9, the configuration maintenance unit includes a receiving unit 901 and a generating unit 902.

The receiving unit 901 is adapted to receive the longitude and latitude information of the AP location from the user management unit 801 and transmit the longitude and latitude information to the generating unit 902.

The generating unit 902 is adapted to search the 2G BS full list within the set range with the center defined by the longitude and latitude information to obtain the 2G BSs falling within the range, and generate the 2G neighbor list based on the obtained 2G BSs.

The generating unit 902 may include a calculating sub unit 9021 and a searching sub unit 9022.

The calculating sub unit 9021 is adapted to add offsets ΔX and ΔY to the longitude X and the latitude Y as a center to obtain a longitude search window X-ΔX, X+ΔX and a latitude search window Y-ΔY, Y+ΔY and transmit the obtained longitude search window and the calculated latitude search window to the searching sub unit 9022.

The searching sub unit 9022 is adapted to search the 2G BS full list falling within the range determined by the longitude search window and the latitude search window, obtain the 2G BSs in the cross region of the longitude search window and the latitude search window, and generate the 2G neighbor list based on the obtained 2G BSs in the cross region.

The configuration maintenance unit further includes a transmitting unit 903, adapted to deliver the generated 2G neighbor list to the AP 803.

Figure 10 is a schematic view of the AP 803 according to an embodiment of the present invention. As shown in Figure 10, the AP includes a receiving unit 1001 and an optimizing unit 1002.

The receiving unit 1001 is adapted to receive the 2G neighbor list from the configuration maintenance unit 802 and transmit the 2G neighbor list to the optimizing unit 1002.

The optimizing unit 1002 is adapted to optimize the received 2G neighbor list to obtain the optimized 2G neighbor list by deleting invalid BSs.

The optimizing unit 1002 may include a transmitting sub unit 10021, a receiving sub unit 10022 and a comparing sub unit 10023.

The transmitting sub unit 10021 is adapted to deliver measurement control information carrying with the 2G neighbor list to the UE 804 under coverage of the AP.

The receiving sub unit 10022 is adapted to receive a measurement report sent by the UE 804, and transmit the measurement report to the comparing sub unit 10023.

The comparing sub unit 10023 is adapted to save the 2G neighbor list from the receiving unit 1001 and the measurement report from the receiving sub unit 10022, compare the 2G neighbor list with the measurement report to obtain the optimized 2G neighbor list by deleting the BSs not recorded in the measurement report from the 2G neighbor list.

The optimizing unit 1002 further includes an optimization timer 10024, adapted to be started at a set moment to instruct the comparing sub unit 10023 to compare the 2G neighbor list with the measurement report when reaching the set time, so as to obtain the optimized 2G neighbor list by deleting the BSs not recorded in the measurement report from the 2G neighbor list.

The AP further includes a reporting unit 1003 adapted to report the optimized 2G neighbor list to the configuration maintenance unit 802.

For the operation detail of the system and the apparatus according to the embodiments of the present invention, please refer to the description of the corresponding part of the method embodiments, and thus are not repeat in detail here. Further, those skilled in the art should know that the embodiments are only for description without limiting the present invention. For example, the method of obtaining the longitude and latitude information of the AP location in step 401 may also be realized by using the Google earth tool based on the address information of the AP location, so as to retrieve the longitude and latitude information corresponding to the address. The details is known in the prior art and thus omitted.

According to the present invention, for a great number of APs, configuration of 2G neighbor for the APs can be implemented automatically by using the address information registered by the AP owners during subscription. Therefore, it is convenient for a subsequent handover from the AP to a 2G network, thereby ensuring service continuity during the handover process, and thus improving the AP networking usability.

In addition, the present invention has advantages as follows.

A dedicated neighbor configuration tool and neighbor selecting experience are not necessary, and the whole operation process is simple to facilitate the personnel to carry out.

The configuration of the apparatus is quite simple without any dedicated receiver for the AP, and only the corresponding software function is required to be added, so the cost is reduced, and the usability value of the AP is improved.

The interfaces among the apparatus may be present, so it may not be necessary to change the existing system architecture.

Information used in the embodiments of the present invention, such as the 2G BS full list, is present and thus a collection is unnecessary. Further, the digital map and other tolls are easily obtained without any difficulty.

## Claims

1. A method for configuring a neighbor list, comprising:
obtaining (301) longitude and latitude information of location of an access point, AP, wherein the AP provides service for a user equipment under the coverage of the AP; and
searching (302) a second generation mobile communication system, 2G, base station, BS, full list within a set range with a center defined by the obtained longitude and latitude information to obtain information of 2G BSs falling within the range, and generating the 2G neighbor list of the AP based on the obtained information of the 2G BSs,
delivering (404) a configuration file carrying with the 2G neighbor list to the AP,
optimizing (405), by the AP, a received 2G neighbor list to obtain an optimized 2G neighbor list by deleting invalid 2G BSs from the received 2G neighbor list,
wherein the optimizing the received 2G neighbor list comprises:
delivering, by the AP, measurement control information carrying with the 2G neighbor list to a user equipment, UE, under the coverage of the AP;
receiving, by the AP, a measurement report obtained through measuring BSs contained in the 2G neighbor list from the UE ; and
comparing by the AP, the measurement report received from the UE with the 2G neighbor list to obtain the optimized 2G neighbor list by deleting the BSs not recorded in the measurement report from the 2G neighbor list,
wherein the 2G neighbor list of the AP is used for handover of the user equipment from the AP to a 2G BS in the 2G neighbor list.

2. The method according to claim 1, further comprising obtaining address information registered by an AP owner during subscription prior to the obtaining longitude and latitude information, wherein
the obtaining longitude and latitude information of location of the AP comprises searching a digital map for the longitude and latitude information corresponding to the address information.

3. The method according to claim 1, wherein the searching 2G BS full list comprises:
adding offsets ΔX and ΔY to a longitude X and a latitude Y as the center to obtain a longitude search window X-ΔX, X + ΔX and a latitude search window Y-ΔY, Y + ΔY; and
searching the 2G BS full list within the range defined by the longitude search window and the latitude search window respectively to obtain information of the 2G BSs in a cross region of the longitude search window and the latitude search window.

4. The method according to claim 1, further comprising:
transmitting (406), by the AP, the optimized 2G neighbor list to an entity transmitting the 2G neighbor list in order for the entity transmitting the 2G neighbor list to update a configuration file stored thereon.

5. A system for configuring a neighbor list comprising an access point, AP, (803) and a configuration maintenance unit,
wherein the configuration maintenance unit comprises a receiving unit (901), a generating unit (902), and a transmitting unit (903), wherein
the receiving unit is adapted to receive longitude and latitude information of location of an access point, AP, from a user management unit, and transmit the longitude and latitude information to the generating unit, wherein the AP provides service for a user equipment under the coverage of the AP;
the generating unit is adapted to search a second generation mobile communication system, 2G, base stations, BS, full list within a set range with a center defined by the longitude and latitude information and obtain information of 2G BSs falling within the range, and generate a 2G neighbor list based on the obtained information of the 2G BSs, wherein the 2G neighbor list of the AP is used for handover of the user equipment from the AP to a 2G BS in the 2G neighbor list; and
the transmitting unit (903) is adapted to transmit the 2G neighbor list to the AP; wherein the AP (803) comprises a receiving unit (1001) and an optimizing unit (1002), wherein
the receiving unit is adapted to receive a second generation mobile communication system, 2G, neighbor list from the configuration maintenance unit, and transmit the 2G neighbor list to the optimizing unit; and
the optimizing unit is adapted to optimize the received 2G neighbor list to obtain an optimized 2G neighbor list by deleting invalid 2G base stations, BSs, from the received 2G neighbor list,
wherein the optimizing unit of the AP (803) comprises a transmitting sub unit (10021), a receiving sub unit (10022) and a comparing sub unit (10023), wherein
the transmitting sub unit is adapted to transmit measurement control information carrying with the 2G neighbor list to a user equipment, UE, under coverage of the AP;
the receiving sub unit is adapted to receive a measurement report sent by the UE and transmit the measurement report to the comparing sub unit; and
the comparing sub unit is adapted to save the 2G neighbor list from the receiving unit and the measurement report from the receiving sub unit, compare the 2G neighbor list with the measurement report to obtain the optimized 2G neighbor list by deleting the BSs not recorded in the measurement report from the 2G neighbor list.

6. The system for configuring a neighbor list according to claim 5, wherein the generating unit of the configuration maintenance unit comprises a calculating sub unit (9021) and a searching sub unit (9022), wherein
the calculating sub unit is adapted to calculate a longitude search window and a latitude search window based on a longitude X and a latitude Y, and transmit the calculated longitude search window and the calculated latitude search window to the searching sub unit; and
the searching sub unit is adapted to respectively search the 2G BS full list within the scope determined by the longitude search window and the latitude search window to obtain the information of the 2G BSs in a cross region of the longitude search window and the latitude search window, and generate the 2G neighbor list based on the obtained information of the 2G BSs.

7. The system for configuring a neighbor list according to claim 5, wherein the calculating sub unit of the configuration maintenance unit is adapted to respectively add offsets ΔX and ΔY to the longitude X and the latitude Y as the center to obtain the longitude search window X-ΔX, X+ΔX and the latitude search window Y-ΔY, Y + ΔY, and transmit the calculated longitude search window and the calculated latitude search window to the searching sub unit; and the searching sub unit of the configuration maintenance unit is adapted to respectively search the 2G BS full list within the scope determined by the longitude search window and the latitude search window to obtain the information of the 2G BSs in a cross region of the longitude search window and the latitude search window, and generate the 2G neighbor list based on the obtained information of the 2G BSs.

8. The system according to any of the claims 5 to 7, wherein the AP (803) further comprises a reporting unit (1003) adapted to send the optimized obtained 2G neighbor list to the configuration maintenance unit.

## Patentansprüche

1. Verfahren zum Konfigurieren einer Nachbarliste, das Folgendes umfasst:
Erhalten (301) von Längen- und Breiteninformationen des Standorts eines Zugangspunkts (access point, AP), wobei der AP Dienste für ein Anwendergerät unter der Abdeckung des AP bereitstellt; und
Durchsuchen (302) einer vollständigen Basisstationsliste, BS-Liste, eines Mobilkommunikationssystems der zweiten Generation, 2G-Mobilkommunikationssystems, innerhalb eines eingestellten Bereichs mit einem Zentrum, das durch die erhaltenen Längen- und Breiteninformationen definiert ist,
um Informationen über 2G-BSs, die in den Bereich fallen, zu erhalten, und Erzeugen der 2G-Nachbarliste des AP basierend auf den erhaltenen Informationen über die 2G-BSs,
Liefern (404) einer Konfigurationsdatei, die die 2G-Nachbarliste mitführt, zu dem AP,
Optimieren (405) durch den AP einer empfangenen 2G-Nachbarliste, durch Löschen unzulässiger 2G-BSs aus der empfangenen 2G-Nachbarliste, um eine optimierte 2G-Nachbarliste zu erhalten,
wobei das Optimieren der empfangenen 2G-Nachbarliste Folgendes umfasst:
Liefern durch den AP von Messungssteuerungsinformationen, die die 2G-Nachbarliste mitführen, zu einem Anwendergerät (user equipment, UE), unter der Abdeckung des AP;
Empfangen durch den AP eines Messberichts, der durch Messen von BSs erhalten wird, die in der 2G-Nachbarliste enthalten sind, von dem UE; und
Vergleichen durch den AP des von dem UE empfangenen Messberichts mit der 2G-Nachbarliste, um durch Löschen der BSs, die nicht in dem Messbericht enthalten sind, aus der 2G-Nachbarliste die optimierte 2G-Nachbarliste zu erhalten,
wobei die 2G-Nachbarliste des AP zur Übergabe des Anwendergeräts von dem AP zu einer 2G-BS in der 2G-Nachbarliste verwendet wird.

2. Verfahren nach Anspruch 1, das ferner das Erhalten von Adressinformationen, die durch einen AP-Eigentümer während des Abonnements eingetragen werden, vor dem Erhalten von Längen- und Breiteninformationen, wobei das Erhalten der Längen- und Breiteninformationen des Standorts des AP das Durchsuchen einer digitalen Landkarte nach den Längen- und Breiteninformationen, die den Adressinformationen entsprechen, umfasst.

3. Verfahren nach Anspruch 1, wobei das Durchsuchen der vollständigen 2G-BS-Liste Folgendes umfasst:
Addieren eines Versatzes ΔX und Δ Y zu einer Länge X und einer Breite Y als dem Zentrum, um ein Längensuchfenster X-ΔX, X+ΔX und ein Breitensuchfenster Y-ΔY, Y+ΔY zu erhalten; und
Durchsuchen der vollständigen 2G-BS-Liste innerhalb des Bereichs, der durch das Längensuchfenster bzw. das Breitensuchfenster definiert ist, um Informationen über die 2G-BSs in einem Überschneidungsbereich des Längensuchfensters und des Breitensuchfensters zu erhalten.

4. Verfahren nach Anspruch 1, das ferner Folgendes umfasst:
Übertragen (406) durch den AP der optimierten 2G-Nachbarliste zu einer Entität, die die 2G-Nachbarliste überträgt, damit die Entität, die die 2G-Nachbarliste überträgt,
eine darin gespeicherte Konfigurationsdatei aktualisiert.

5. System zum Konfigurieren einer Nachbarliste, das einen Zugangspunkt, AP, (803) und eine Konfigurationspflegeeinheit umfasst,
wobei die Konfigurationspflegeeinheit eine Empfangseinheit (901), eine Erzeugungseinheit (902) und eine Übertragungseinheit (903) umfasst, wobei die Empfangseinheit ausgelegt ist, Längen- und Breiteninformationen des Standorts eines Zugangspunkts, AP, von einer Anwendermanagementeinheit zu empfangen und die Längen- und Breiteninformationen zu der Erzeugungseinheit zu übertragen, wobei der AP Dienste für ein Anwendergerät unter der Abdeckung des AP bereitstellt;
die Erzeugungseinheit ausgelegt ist, eine vollständige Basisstationsliste, BS-Liste, eines Mobilkommunikationssystems der zweiten Generation, 2G-Mobilkommunikationssystems, innerhalb eines eingestellten Bereichs mit einem Zentrum, das durch die Längen- und Breiteninformationen definiert ist, zu durchsuchen und Informationen über 2G-BSs, die in den Bereich fallen, zu erhalten und eine 2G-Nachbarliste basierend auf den erhaltenen Informationen über die 2G-BSs zu erzeugen, wobei die 2G-Nachbarliste des AP zur Übergabe des Anwendergeräts von dem AP zu einer 2G-BS in der 2G-Nachbarliste verwendet wird; und
die Übertragungseinheit (903) ausgelegt ist, die 2G-Nachbarliste zu dem AP zu übertragen;
wobei der AP (803) eine Empfangseinheit (1001) und eine Optimierungseinheit (1002) umfasst, wobei
die Empfangseinheit ausgelegt ist, eine Nachbarliste eines Mobilkommunikationssystems der zweiten Generation, 2G-Mobilkommunikationssystems, von der Konfigurationspflegeeinheit zu empfangen und die 2G-Nachbarliste zu der Optimierungseinheit zu übertragen; und
die Optimierungseinheit ausgelegt ist, die empfangene 2G-Nachbarliste durch Löschen unzulässiger 2G-Basisstationen, BSs, aus der empfangenen 2G-Nachbarliste zu optimieren, um eine optimierte 2G-Nachbarliste zu erhalten,
wobei die Optimierungseinheit des AP (803) eine Übertragungsuntereinheit (10021), eine Empfangsuntereinheit (10022) und eine Vergleichsuntereinheit (10023) umfasst, wobei
die Übertragungsuntereinheit ausgelegt ist, Messungssteuerungsinformationen, die die 2G-Nachbarliste mitführen, zu einem Anwendergerät, UE, unter der Abdeckung des AP zu übertragen;
die Empfangsuntereinheit ausgelegt ist, einen Messbericht, der durch das UE gesendet wird, zu empfangen und den Messbericht zu der Vergleichsuntereinheit zu übertragen; und
die Vergleichsuntereinheit ausgelegt ist, die 2G-Nachbarliste von der Empfangseinheit und den Messbericht von der Empfangsuntereinheit zu speichern, die 2G-Nachbarliste mit dem Messbericht zu vergleichen, um die optimierte 2G-Nachbarliste durch Löschen der BSs, die nicht in dem Messbericht enthalten sind,
aus der 2G-Nachbarliste zu erhalten.

6. System zum Konfigurieren einer Nachbarliste nach Anspruch 5, wobei die Erzeugungseinheit der Konfigurationspflegeeinheit eine Berechnungsuntereinheit (9021) und eine Suchuntereinheit (9022) umfasst, wobei
die Berechnungsuntereinheit ausgelegt ist, ein Längensuchfenster und ein Breitensuchfenster basierend auf einer Länge X und einer Breite Y zu berechnen und das berechnete Längensuchfenster und das berechnete Breitensuchfenster zu der Suchuntereinheit zu übertragen; und
die Suchuntereinheit ausgelegt ist, jeweils die vollständige 2G-BS-Liste innerhalb des Rahmens, der durch das Längensuchfenster und das Breitensuchfenster bestimmt ist, zu durchsuchen, um die Informationen über die 2G-BSs in einem Überschneidungsbereich des Längensuchfensters und des Breitensuchfensters zu erhalten, und die 2G-Nachbarliste basierend auf den erhaltenen Informationen über die 2G-BSs zu erzeugen.

7. System zum Konfigurieren einer Nachbarliste nach Anspruch 5, wobei die Berechnungsuntereinheit der Konfigurationspflegeeinheit ausgelegt ist, jeweils einen Versatz ΔX und ΔY zu der Länge X und der Breite Y als dem Zentrum zu addieren, um das Längensuchfenster X- ΔX, X+ΔX und das Breitensuchfenster Y-ΔY, Y+ΔY zu erhalten, und das berechnete Längensuchfenster und das berechnete Breitensuchfenster zu der Suchuntereinheit zu übertragen; und die Suchuntereinheit der Konfigurationspflegeeinheit ausgelegt ist, jeweils die vollständige 2G-BS-Liste innerhalb des Rahmens, der durch das Längensuchfenster und das Breitensuchfenster bestimmt ist, zu durchsuchen, um die Informationen über die 2G-BSs in einem Überschneidungsbereich des Längensuchfensters und des Breitensuchfensters zu erhalten, und die 2G-Nachbarliste basierend auf den erhaltenen Informationen über die 2G-BSs zu erzeugen.

8. System nach einem der Ansprüche 5 bis 7, wobei der AP (803) ferner eine Berichtseinheit (1003) umfasst, die ausgelegt ist, die erhaltene optimierte 2G-Nachbarliste zu der Konfigurationspflegeeinheit zu senden.

## Revendications

1. Procédé de configuration d'une liste de stations voisines, comprenant :
l'obtention (301) d'informations de longitude et latitude de position d'un point d'accès, AP, l'AP fournissant un service à un équipement utilisateur se trouvant dans la couverture de l'AP ; et
l'exploration (302) d'une liste complète de stations de base, BS, d'un système de communication mobile de deuxième génération, 2G, se trouvant dans une portée définie avec un centre défini par les informations de longitude et latitude obtenues pour obtenir des informations de stations BS 2G se trouvant dans la portée, et générer la liste de stations voisines 2G de l'AP en fonction des informations obtenues des stations BS 2G,
la délivrance (404) d'un fichier de configuration comportant la liste de stations voisines 2G à l'AP,
l'optimisation (405), par l'AP, d'une liste de stations voisines 2G reçue pour obtenir une liste de stations voisines 2G optimisée en supprimant les stations BS 2G non valables de la liste de stations voisines 2G reçue,
dans lequel l'optimisation de la liste de stations voisines 2G reçue comprend :
la délivrance, par l'AP, d'informations de commande de mesure comportant la liste de stations voisines 2G à un équipement utilisateur, UE, se trouvant dans la couverture de l'AP ;
la réception, par l'AP, d'un rapport de mesure obtenu par la mesure des stations BS contenues dans la liste de stations voisines 2G depuis l'UE ; et
la comparaison par l'AP, du rapport de mesure reçu de l'UE à la liste de stations voisines 2G pour obtenir la liste de stations voisines 2G optimisée en supprimant de la liste de stations voisines 2G les stations BS non enregistrées dans le rapport de mesure,
dans lequel la liste de stations voisines 2G de l'AP est utilisée pour le transfert de l'équipement utilisateur de l'AP à une BS 2G dans la liste de stations voisines 2G.

2. Procédé selon la revendication 1, comprenant en outre l'obtention d'informations d'adresse enregistrées par un propriétaire d'AP durant l'abonnement avant l'obtention d'informations de longitude et latitude, dans lequel
l'obtention d'informations de longitude et latitude de position de l'AP comprend la recherche sur une carte numérique des informations de longitude et latitude correspondant aux informations d'adresse.

3. Procédé selon la revendication 1, dans lequel l'exploration de la liste complète de stations BS 2G comprend :
l'ajout de décalages ΔX et ΔY à une longitude X et une latitude Y comme centre pour obtenir une fenêtre de recherche de longitude X - ΔX, X + ΔX et une fenêtre de recherche de latitude Y-ΔY, Y+ΔY ; et
l'exploration de la liste complète de stations BS 2G se trouvant dans la portée définie par la fenêtre de recherche de longitude et la fenêtre de recherche de latitude respectivement pour obtenir des informations des stations BS 2G dans une région d'intersection de la fenêtre de recherche de longitude et de la fenêtre de recherche de latitude.

4. Procédé selon la revendication 1, comprenant en outre :
la transmission (406), par l'AP, de la liste de stations voisines 2G optimisée à une entité qui transmet la liste de stations voisines 2G afin que l'entité qui transmet la liste de stations voisines 2G actualise un fichier de configuration qu'elle a mémorisé.

5. Système de configuration d'une liste de stations voisines comprenant un point d'accès, AP (803), et une unité de maintenance de configuration,
dans lequel l'unité de maintenance de configuration comprend une unité de réception (901), une unité de génération (902), et une unité de transmission (93), dans lequel l'unité de réception est adaptée pour recevoir des informations de longitude et latitude de position d'un point d'accès, AP, depuis une unité de gestion d'utilisateur, et transmettre les informations de longitude et latitude à l'unité de génération, dans lequel l'AP dessert un équipement utilisateur se trouvant dans la couverture de l'AP ; l'unité de génération est adaptée pour explorer une liste complète de stations de base, BS, d'un système de communication mobile de deuxième génération, 2G, se trouvant dans une portée définie avec un centre défini par les informations de longitude et latitude et obtenir des informations de stations BS 2G se trouvant dans la portée, et générer une liste de stations voisines 2G en fonction des informations obtenues des stations BS 2G, dans lequel la liste de stations voisines 2G de l'AP est utilisée pour le transfert de l'équipement utilisateur de l'AP à une station BS 2G comprise dans la liste de stations voisines 2G ; et
l'unité de transmission (903) est adaptée pour transmettre la liste de stations voisines 2G à l'AP ;
dans lequel l'AP (803) comprend une unité de réception (1001) et une unité d'optimisation (1002), dans lequel
l'unité de réception est adaptée pour recevoir une liste de stations voisines d'un système de communication mobile de deuxième génération, 2G, depuis l'unité de maintenance de configuration, et transmettre la liste de stations voisines 2G à l'unité d'optimisation ; et
l'unité d'optimisation est adaptée pour optimiser la liste de stations voisines 2G reçue pour obtenir une liste de stations voisines 2G optimisée en supprimant de la liste de stations voisines 2G reçue les stations de base, BS, 2G non valables,
dans lequel l'unité d'optimisation de l'AP (803) comprend une sous-unité de transmission (10021), une sous-unité de réception (10022) et une sous-unité de comparaison (10023), dans lequel
la sous-unité de transmission est adaptée pour transmettre des informations de commande de mesure comportant la liste de stations voisines 2G à un équipement utilisateur, UE, se trouvant dans la couverture de l'AP ;
la sous-unité de réception est adaptée pour recevoir un rapport de mesure envoyé par l'UE et transmettre le rapport de mesure à la sous-unité de comparaison ; et
la sous-unité de comparaison est adaptée pour sauvegarder la liste de stations voisines 2G provenant de l'unité de réception et le rapport de mesure provenant de la sous-unité de réception, et comparer la liste de stations voisines 2G au rapport de mesure pour obtenir la liste de stations voisines 2G optimisée en supprimant de la liste de stations voisines 2G les BS non enregistrées dans le rapport de mesure.

6. Système de configuration d'une liste de stations voisines selon la revendication 5, dans lequel l'unité de génération de l'unité de maintenance de configuration comprend une sous-unité de calcul (9021) et une sous-unité de recherche (9022), dans lequel
la sous-unité de calcul est adaptée pour calculer une fenêtre de recherche de longitude et une fenêtre de recherche de latitude en fonction d'une longitude X et d'une latitude Y, et transmettre la fenêtre de recherche de longitude calculée et la fenêtre de recherche de latitude calculée à la sous-unité de recherche ; et
la sous-unité de recherche est adaptée pour rechercher respectivement la liste complète de stations BS 2G se trouvant dans la portée déterminée par la fenêtre de recherche de longitude et la fenêtre de recherche de latitude afin d'obtenir les informations des stations BS 2G dans une région d'intersection de la fenêtre de recherche de longitude et de la fenêtre de recherche de latitude, et générer la liste de stations voisines 2G en fonction des informations obtenues des stations BS 2G.

7. Système de configuration d'une liste de stations voisines selon la revendication 5, dans lequel la sous-unité de calcul de l'unité de maintenance de configuration est adaptée pour ajouter respectivement des décalages ΔX et ΔY à la longitude X et la latitude Y comme centre pour obtenir la fenêtre de recherche de longitude X - ΔX, X + ΔX et la fenêtre de recherche de latitude Y - ΔY, Y + ΔY, et transmettre la fenêtre de recherche de longitude calculée et la fenêtre de recherche de latitude calculée à la sous-unité de recherche ; et la sous-unité de recherche de l'unité de maintenance de configuration est adaptée pour explorer respectivement la liste complète de stations BS 2G se trouvant dans la portée définie par la fenêtre de recherche de longitude et la fenêtre de recherche de latitude pour obtenir les informations des stations BS 2G dans une région d'intersection de la fenêtre de recherche de longitude et de la fenêtre de recherche de latitude, et générer la liste de stations voisines 2G en fonction des informations obtenues des stations BS 2G.

8. Système selon l'une quelconque des revendications 5 à 7, dans lequel l'AP (803) comprend en outre une unité de communication (1003) adaptée pour envoyer la liste de stations voisines 2G obtenue optimisée à l'unité de maintenance de configuration.
